# EUROPEAN PATENT APPLICATION

(11) **EP 4 184 343 A1**
(43) Date of publication of application: **24.05.2023**
(21) Application number: 22203332.6
(22) Date of filing: 24.10.2022
(51) Int. Cl.: G06F 16/23

(54) **INFORMATION PROCESSING SYSTEM, INFORMATION PROCESSING METHOD AND INFORMATION PROCESSING PROGRAM**

(30) Priority: 18.11.2021 JP 2021187662
(71) Applicant: OMRON Corporation, Kyoto 600-8530 (JP)
(72) Inventor: YACHIKU, Hideki, Kyoto-shi, 600-8530 (JP); FUKUDA, Koji, Kyoto-shi, 600-8530 (JP); SAITO, Serika, Kyoto-shi, 600-8530 (JP)
(74) Representative: Mewburn Ellis LLP

(57) **Abstract**

An information processing system (1) includes: a transmission unit (200, 250) configured to transmit transmission data (50) including data (54) including one or more values (58) and identification information (56) associated with the one or more values and a topic (52) indicating an attribute of the data; a database (160, 162) configured to store data for each topic; and a data management unit (152) configured to specify a storage destination of data based on the topic included in the transmission data and stores the data included in the transmission data in the specified storage destination of the data. When a value associated with same identification information as the identification information included in the transmission data is already stored in the database, the data management unit stores one or more values included in the data included in the transmission data in association with the identification information already stored in the database.

## Description

### BACKGROUND OF THE INVENTION

### Field of the Invention

The present invention relates to an information processing system, an information processing method, and an information processing program related to data collection.

### Description of the Background Art

Along with progress of information communication technology, efforts to collect and utilize various data have been made.

For example, Japanese National Patent Publication No. 2020-503784 discloses a device including a composite object in an IoT network. In addition, Japanese Patent Laying-Open No. 2019-133610 discloses a data orchestration platform management method in a network communication environment including a plurality of data sources.

In addition, as a technique for searching collected data, Japanese National Patent Publication No. 2017-516213 discloses a configuration in which more advanced search engine optimization is added to current resource directory functionality that will provide a most efficient search result to an IoT or M2M device.

At a production site and the like, efforts to collect and utilize various data have been made. In the production site and the like, related data is required to be associated for each workpiece and/or each process. In order to implement such the data association, common identification information is required to be assigned to the associated data. Problems such as an increase in an amount of data to be stored and an increase in analysis processing load may be generated by assigning the common identification information to each data.

### SUMMARY OF THE INVENTION

One object of the present invention is to provide a technique for efficiently collecting and storing data and facilitating data utilization.

An information processing system according to one example of the present invention includes: a transmission unit configured to transmit transmission data including data including one or more values and identification information associated with the one or more values and a topic indicating an attribute of the data; a database configured to store data for each topic; and a data management unit configured to specify a storage destination of data based on the topic included in the transmission data and stores the data included in the transmission data in the specified storage destination of the data. When a value associated with same identification information as the identification information included in the transmission data is already stored in the database, the data management unit stores one or more values included in the data included in the transmission data in association with the identification information already stored in the database.

According to this configuration, even when a plurality of transmission data including the same topic and the same identification information are transmitted, one or more values included in each transmission data are stored in the database in association with the same topic and the same identification information. Thus, even when the plurality of transmission data are transmitted at different timings, the data included in each transmission data can be efficiently collected and stored. In addition, because items and the like can be automatically added to the database based on the transmission data, the structure of the database is not required to be explicitly changed.

When a storage destination of data associated with the topic included in the transmission data does not exist, the data management unit may newly generate the storage destination of data associated with the topic. According to this configuration, even in the case where the transmission data including the new topic is generated, the inside of the database can be automatically expanded, so that the database is not required to be reconfigured, and a flexibly expandable database can be implemented.

When the value associated with the same identification information as the identification information included in the transmission data is not stored in the database, the data management unit may add a new record in order to store the value associated with the identification information. According to this configuration, when the transmission data including the value associated with new identification information is generated, the value associated with the new identification information can be reliably stored in the database.

When a column storing a data name of a value included in the transmission data does not exist, the data management unit may add a new column in order to store the value of the data name. According to this configuration, even when a plurality of values associated with the same identification information exist, an area where each value is stored can be flexibly secured.

The data management unit may execute a predetermined operation on a plurality of values associated with the same identification information and add a new value. According to this configuration, more useful information can be generated by executing an arbitrary operation on the values individually collected by the collection unit.

The data management unit may determine whether same topic as the topic set in the transmission unit already exists in the database. According to this configuration, when a transmission unit is newly added, a possibility that the already used topic is erroneously set can be reduced.

The data management unit may determine whether same data name as the data name of the one or more values included in the transmission data transmitted by the transmission unit already exists in the database. According to this configuration, when a transmission unit is newly added, the possibility that the already used data name is erroneously set can be reduced.

The topics may be described in a hierarchical structure. According to this configuration, the topic can be described in association with the configuration of the production site that is the data collection target.

According to a totalization request, the data management unit may execute totalization processing designated by the totalization request on a plurality of values associated with a topic designated by the totalization request. According to this configuration, the totalization result for a plurality of values related to a specific topic can be easily acquired.

The totalization request may include a description using a wildcard for designating a target topic. According to this configuration, even when each of the target topics cannot be specified, the totalization processing can be executed when at least a part of the common attribute is specified.

When receiving the totalization request, the data management unit may execute the totalization processing according to the received totalization request. According to this configuration, the processing result can be acquired every time the totalization request is transmitted.

An information processing method according to another example of the present invention includes: managing a database configured to store data for each topic; transmitting transmission data including data including one or more values and identification information associated with the one or more values and a topic indicating an attribute of the data; specifying a storage destination of data based on the topic included in the transmission data; and storing the data included in the transmission data in the specified storage destination of the data. The storing includes storing one or more values included in the data included in the transmission data in association with the identification information already stored in the database when a value associated with same identification information as the identification information included in the transmission data is already stored in the database.

An information processing program according to still another example of the present invention causing a computer to execute: managing a database configured to store data for each topic; specifying a storage destination of data based on a topic included in transmission data in response to the transmission data including data including one or more values and identification information associated with the one or more values and the topic indicating an attribute of the data; and storing the data included in the transmission data in the specified storage destination of the data. The storing includes storing one or more values included in the data included in the transmission data in association with the identification information already stored in the database when a value associated with same identification information as the identification information included in the transmission data is already stored in the database.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Figs. 1A and 1B are each a schematic diagram illustrating an application example of an information processing system according to an embodiment.
Fig. 2 is a schematic diagram illustrating an overall configuration example of the information processing system of the embodiment.
Fig. 3 is a block diagram illustrating a hardware configuration example of a server device of the information processing system according to the embodiment.
Fig. 4 is a block diagram illustrating a hardware configuration example of a transmission device of the information processing system according to the embodiment.
Fig. 5 is a schematic diagram illustrating a functional configuration example implementing collection processing of the information processing system of the embodiment.
Fig. 6 is a schematic diagram illustrating an example of the information processing system of the embodiment.
Fig. 7 is a schematic diagram illustrating an example of a temporal change generated in a data structure of a database in the information processing system of Fig. 6.
Fig. 8 is a flowchart illustrating a processing procedure executed by the server device related to the collection processing of the information processing system of the embodiment.
Fig. 9 is a schematic diagram illustrating management processing of the information processing system of the embodiment.
Fig. 10 is a sequence diagram illustrating a processing procedure related to the management processing of the information processing system of the embodiment.
Fig. 11 is a schematic diagram illustrating totalization processing of the information processing system of the embodiment.
Fig. 12 is a flowchart illustrating a processing procedure executed by the server device related to the totalization processing of the information processing system of the embodiment.

### DESCRIPTION OF THE PREFERRED EMBODIMENT

With reference to the drawings, an embodiment of the present invention will be described in detail. The same or equivalent part in the drawings is denoted by the same reference numeral, and the description will not be repeated.

### <A. Application example>

An example of a scene to which the present invention is applied will be described.

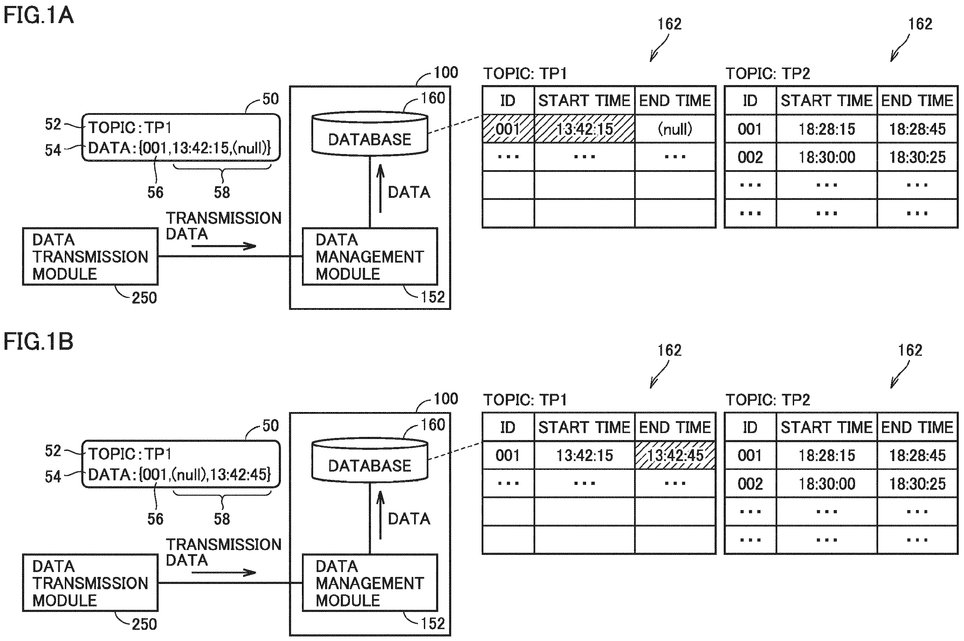

Figs. 1A and 1B are schematic diagrams illustrating an application example of an information processing system 1 according to the embodiment. With reference to Figs. 1A and 1B, information processing system 1 includes a server device 100 that receives transmission data 50 from a data transmission module 250. Server device 100 includes a data management module 152 and a database 160.

Transmission data 50 transmitted by data transmission module 250 includes data 54 and a topic 52 indicating an attribute of data 54. Data 54 included in transmission data 50 includes one or more values 58 and an ID 56 that is identification information associated with the one or more values 58. ID 56 is identification information specifying data 54.

In the present specification, the "topic" means arbitrary information indicating the attribute of the data, and is appropriately set according to a target collecting the data. The topic can be set in any unit of data desired to be managed. For example, a process name in which the data is collected, a place (factory name or floor name) in which the data is collected, a device in which the data is collected, a work type in which the data is collected, and the like can be set as the topic.

Database 160 stores one or more tables 162 for each topic 52. That is, database 160 is configured to store data for each topic. Fig. 1 illustrates an example in which two tables 162 to which "TP1" and "TP2" are respectively assigned as topics 52 are stored in database 160.

Data management module 152 specifies a storage destination (table 162) of data 54 based on topic 52 included in transmission data 50, and stores data 54 included in transmission data 50 in the specified storage destination of the data.

In the example of Figs. 1A and 1B, data 54 is configured to store two values of "start time" and "end time" as data names. However, in data 54 of Fig. 1A, only the value of "start time" is stored, and the value of "end time" is not stored (for example, null is stored). On the other hand, only the value of "end time" is stored in data 54 of Fig. 1B, and the value of "start time" is not stored (for example, null is stored).

Data 54 in Figs. 1A and 1B includes the same ID 56 (for example, "001").

With reference to Fig. 1A, data management module 152 specifies table 162 to which "TP1" is assigned based on topic 52 of transmission data 50. Then, data management module 152 newly generates an entry of "001" that is ID 56 included in transmission data 50, and stores value 58 of "start time" included in transmission data 50 in the entry.

Thereafter, as illustrated in Fig. 1B, when data management module 152 receives transmission data 50, table 162 to which "TP1" is assigned is specified based on topic 52 of transmission data 50. Here, because the entry of "001" that is ID 56 included in transmission data 50 already exists, data management module 152 does not generate a new entry, but stores value 58 of "end time" included in transmission data 50 in the existing entry of "001" in the entry.

As described above, when value 58 associated with the same identification information as the identification information (ID 56) included in transmission data 50 is already stored in database 160 (or table 162), data management module 152 stores one or more values 58 included in data 54 included in transmission data 50 in association with identification information (ID 56) already stored in database 160.

By adopting such the configuration, even when a plurality of pieces of transmission data 50 including the same topic and the same identification information (ID 56) are transmitted at different timings, all values can be stored in database 160 (or table 162) in association with the same topic and the same identification information. Thus, the topic and the identification information do not need to be duplicately stored in database 160, and the data can be efficiently collected and stored.

### <B. Overall configuration example of information processing system>

Information processing system 1 of the embodiment mainly collects the data from a production site, but a target collecting the data is not particularly limited.

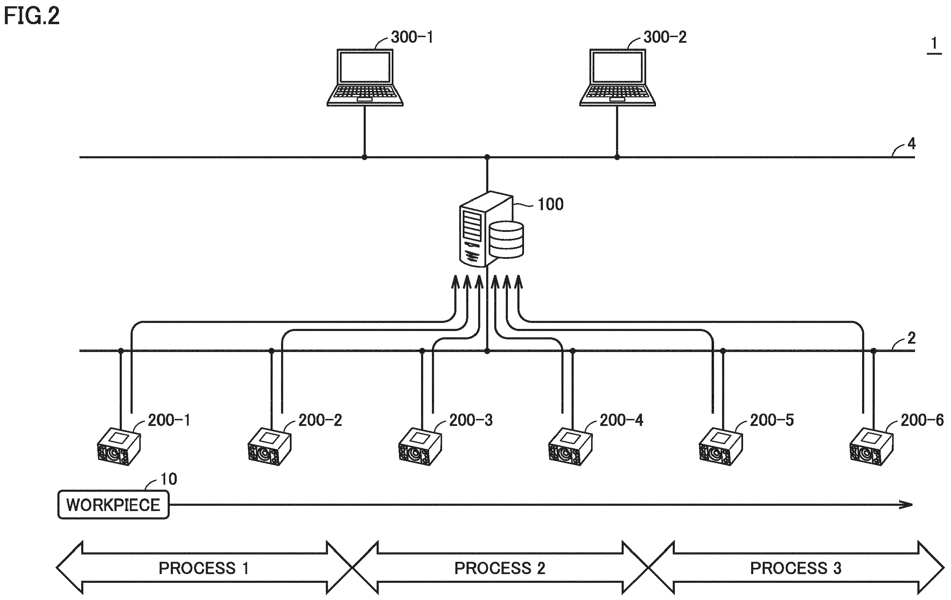

Fig. 2 is a schematic diagram illustrating an overall configuration example of information processing system 1 of the embodiment. With reference to Fig. 2, information processing system 1 includes a server device 100, one or more transmission devices 200-1, 200-2, 200-3, 200-4, 200-5, 200-6,... (hereinafter, also collectively referred to as a "transmission device 200"), and information processing devices 300-1, 300-2,... (hereinafter, also collectively referred to as an "information processing device 300").

Server device 100 stores the data transmitted from transmission device 200 through a network 2 and executes required information processing. In addition, server device 100 provides the stored data in response to a totalization request from information processing device 300 or the like.

Each of transmission devices 200 collects predetermined data from the production site or the like, and transmits the data to server device 100. The timing at which transmission device 200 transmits data to server device 100 can be arbitrarily determined.

As illustrated in Fig. 2, assuming a line in which a workpiece 10 becomes a product through a plurality of processes, each of transmission devices 200 is disposed in any process, and transmits data collected from workpiece 10 passing through each process to server device 100.

Information processing device 300 accesses the server device 100 through network 4 and provides arbitrary data.

### <C. Hardware configuration>

An example of a hardware configuration of a device constituting information processing system 1 according to the embodiment will be described below.

### (c1: Server device 100)

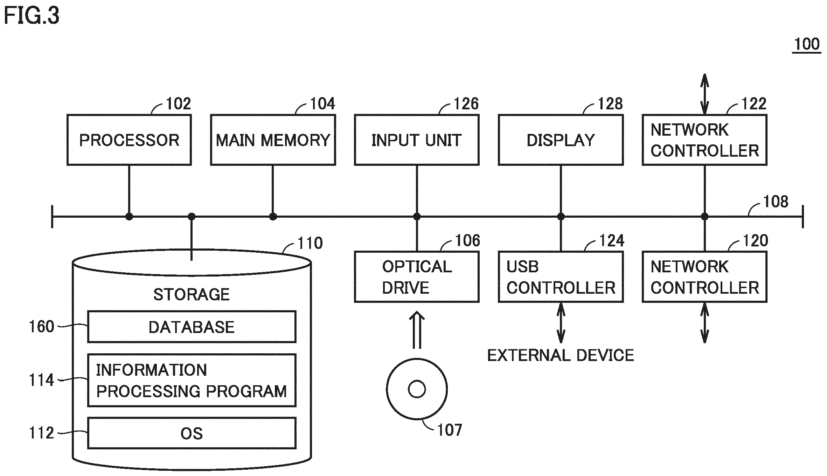

Fig. 3 is a block diagram illustrating a hardware configuration example of server device 100 of information processing system 1 according to the embodiment. With reference to Fig. 3, server device 100 includes one or more processors 102 such as a central processing unit (CPU) and a micro-processing unit (MPU), a main memory 104, an optical drive 106, a storage 110, network controllers 120, 122, a universal serial bus (USB) controller 124, an input unit 126, and a display 128. These components are connected to each other through a bus 108.

Processor 102 reads various programs stored in storage 110, develops the programs in main memory 104, and executes the programs, thereby implementing required processing in server device 100.

For example, storage 110 includes one or more nonvolatile storage devices such as a hard disk drive (HDD) or a flash solid state drive (SSD). Storage 110 typically stores an operating system (OS) 112 and an information processing program 114 implementing various processes described later. Required programs other than the program in Fig. 3 may be stored in storage 110.

Database 160 configured by the data collected from transmission device 200 may be implemented using a storage area of storage 110.

Server device 100 may include optical drive 106. Optical drive 106 reads a computer-readable program from a recording medium 107 (for example, an optical recording medium such as a digital versatile disc (DVD)) that non-transiently stores the program, and stores the program in storage 110 or the like.

Various programs executed by server device 100 may be installed through computer-readable recording medium 107, and may be installed by being downloaded from an arbitrary server on the network.

Network controller 120 controls data exchange with transmission device 200 and the like through network 2. Network controller 122 controls data exchange with information processing device 300 and the like through network 4.

USB controller 124 controls data exchange with an external device (for example, a support device) through USB connection.

Input unit 126 is configured of a touch panel, a mouse, a keyboard, and the like, and receives a user operation. Display 128 is configured of a display, various indicators, and the like, and outputs a processing result and the like from processor 102.

Although the configuration example in which required processing are provided by processor 102 executing the program has been described in Fig. 3, a part or all of provided processing may be implemented using a dedicated hardware circuit (for example, an application specific integrated circuit (ASIC) and a field-programmable gate array (FPGA)).

In addition, all or a part of the processing that server device 100 is in charge of may be executed using cloud computing on the network.

### (c2: Transmission device 200)

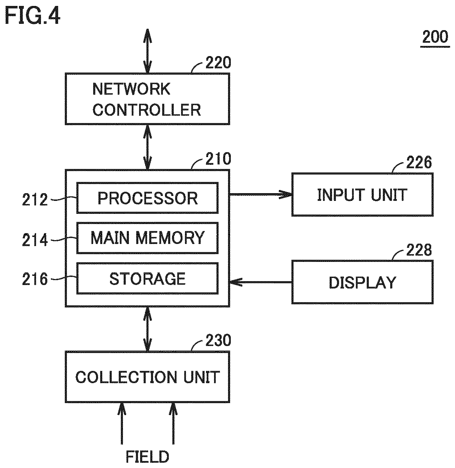

Fig. 4 is a block diagram illustrating a hardware configuration example of transmission device 200 of information processing system 1 according to the embodiment. With reference to Fig. 4, transmission device 200 includes a processing circuit 210, a network controller 220, an input unit 226, a display 228, and a collection unit 230.

Processing circuit 210 includes a processor 212 such as a CPU or an MPU, a main memory 214, and a storage 216 such as a flash memory. Processor 212 reads various programs stored in storage 216, develops the programs in main memory 214, and executes the programs, thereby implementing required processing in transmission device 200.

Network controller 220 controls data exchange with server device 100 and the like through network 2.

Input unit 226 is configured of a touch panel, a mouse, a keyboard, and the like, and receives a user operation. Display 228 is configured of a display, various indicators, and the like, and outputs a processing result and the like from processor 102. A touch panel display in which input unit 226 and display 228 are integrated may be adopted, or input unit 226 and display 228 may be omitted.

Collection unit 230 includes an arbitrary configuration collecting the data. For example, collection unit 230 can include an optical device that optically reads a two-dimensional or three-dimensional code applied to the workpiece or the like or an interface circuit that collects the data from an arbitrary measurement device.

Although the configuration example in which the required processing is provided by processor 212 executing the program has been illustrated in Fig. 4, some or all of the provided processing may be mounted using the dedicated hardware circuit (for example, the ASIC or the FPGA). Alternatively, a main part of transmission device 200 may be implemented using hardware (for example, an industrial personal computer based on a general-purpose personal computer) according to a general-purpose architecture.

Furthermore, transmission device 200 may be implemented not by a single device but by cooperation of a plurality of devices. For example, transmission device 200 may be implemented by adding a communication interface generating and transmitting the transmission data to an existing sensor or a controller.

Furthermore, a function corresponding to transmission device 200 may be implemented as software executed by an arbitrary device. In this case, it may be implemented by adding software corresponding to transmission device 200 in addition to the software executed by the existing device.

### (c3: Information processing device 300)

Information processing device 300 of information processing system 1 of the embodiment is configured of a general personal computer or the like. A general personal computer is known, so that a detailed description thereof will not be given.

### <D. Basic collection processing>

Basic collection processing in information processing system 1 of the embodiment will be described below.

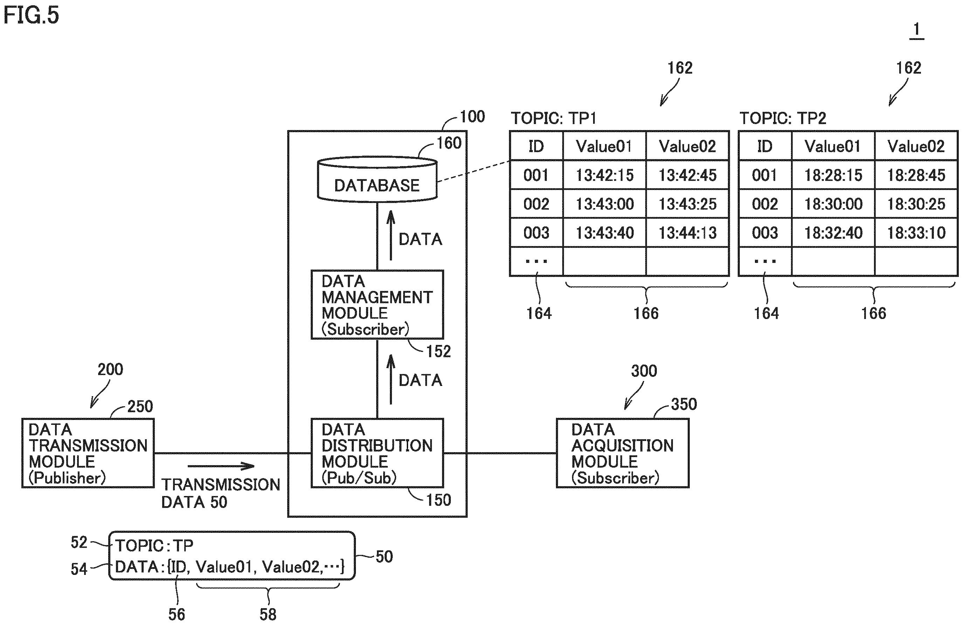

Fig. 5 is a schematic diagram illustrating a functional configuration example implementing collection processing of information processing system 1 of the embodiment. With reference to Fig. 5, in information processing system 1, server device 100 includes a data distribution module 150, a data management module 152, and a database 160. Transmission device 200 includes a data transmission module 250. Information processing device 300 includes a data acquisition module 350.

Data transmission module 250 of transmission device 200 corresponds to a transmission unit, and collects and transmits data. The data transmitted by data transmission module 250 is referred to as "transmission data 50".

Transmission data 50 includes topic 52 that indicates the attribute of stored data 54. Data 54 stored in transmission data 50 includes one or more values 58 and ID 56 associated with the one or more values 58. ID 56 is the identification information specifying data 54.

Data distribution module 150 of server device 100 specifies topic 52 included in transmission data 50 received from data transmission module 250, and transfers transmission data 50 to data management module 152 and/or data acquisition module 350 that subscribes to specified topic 52. The distribution destination of transmission data 50 may be a plurality of modules. Data distribution module 150 may transfer all of received transmission data 50 to data management module 152.

Data acquisition module 350 of information processing device 300 notifies data distribution module 150 of the topic of the subscription target specified by the user. In addition, data acquisition module 350 notifies data distribution module 150 of the topic of the data desired to be acquired from among the stored data. In response to the notification, data distribution module 150 sends the data corresponding to the specified topic to data acquisition module 350.

The data management module 152 of the server device 100 stores the corresponding data 54 in database 160 based on the topic 52 included in transmission data 50 received from data distribution module 150. In this manner, data management module 152 specifies the storage destination of the data based on topic 52 included in transmission data 50, and stores data 54 included in transmission data 50 in the specified storage destination of the data.

Data management module 152 may search the data stored in database 160 in response to the totalization request from data distribution module 150.

In addition, data management module 152 may be responsible for updating (including addition and deletion) the data structure of database 160 as described later. Furthermore, data management module 152 may perform an arbitrary operation on data 54 included in transmission data 50.

Database 160 is configured to store data for each topic. More specifically, database 160 stores one or more tables 162 for each topic 52. Each table 162 stores an ID 164 and one or more values 166 in association with each other.

The topic is not limited to a single value as described above, but a hierarchical structure may be adopted. In the case of describing in the hierarchical structure, "relative notation" and/or "absolute notation" may be introduced. The "relative notation" indicates a route from an arbitrary reference, and may be a notation that does not start with "/" such as "line3/process5".

Furthermore, the "absolute notation" indicates a route that can be uniquely specified in the target system, and for example, notation starting with "/" such as "/factory2/line3/process5" may be used. At this time, the head part (for example, "/factory2/") of the absolute notation can be referred to as a global topic, and the subsequent part (for example, "line3/process5") can be referred to as a local topic. The relative notation can also be considered as the local topic without the global topic.

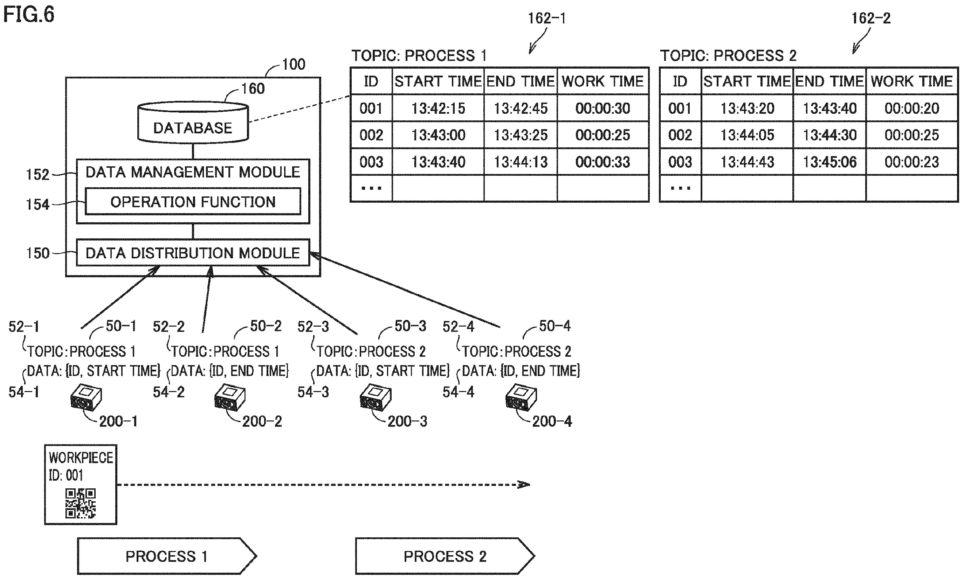

Fig. 6 is a schematic diagram illustrating an example of information processing system 1 of the embodiment. Fig. 6 illustrates an example in which workpiece 10 is processed in processes 1 and 2. Information processing system 1 collects the start time and the end time of processing on workpiece 10 in process 1 and process 2.

With reference to Fig. 6, workpiece 10 is conveyed by a conveyor or the like in the order of process 1 and process 2, and processing such as machining and assembly are performed in each process. A two-dimensional code 12 indicating an ID (001, 002, 003,...) specifying workpiece 10 is assigned to workpiece 10.

Transmission device 200 optically reads two-dimensional code 12 to acquire the ID of workpiece 10, and also acquires the time when the ID is acquired. Transmission device 200 is disposed at a processing start point or a processing end point of any process. Accordingly, transmission device 200 can transmit the start time or the end time of the processing on workpiece 10 to server device 100 in each process. That is, data 54 of transmission data 50 transmitted by transmission device 200 includes the ID of workpiece 10 and the start time or the end time.

More specifically, transmission device 200-1 is disposed at the processing start point of process 1, and transmission device 200-2 is disposed at the processing end point of process 1. Similarly, transmission device 200-3 is disposed at the processing start point of process 2, and transmission device 200-4 is disposed at the processing end point of process 2.

As described above, when workpiece 10 passes, each of transmission devices 200 optically reads two-dimensional code 12 assigned to workpiece 10, and transmits the time at which two-dimensional code 12 is optically read to server device 100. At this time, each of transmission devices 200 includes information specifying the disposed process in transmission data 50 as topic 52.

More specifically, when workpiece 10 passes (when the processing on workpiece 10 in process 1 is started), transmission device 200-1 generates the ID of workpiece 10 obtained by optically reading two-dimensional code 12 assigned to workpiece 10 and the start time that is the time when the ID of workpiece 10 is read as data 54-1. Then, transmission device 200-1 adds "process 1" to data 54-1 as topic 52-1 to generate transmission data 50-1, and transmits transmission data 50-1 to server device 100.

When receiving transmission data 50-1 from transmission device 200-1, server device 100 (data management module 152) specifies table 162-1 corresponding to "process 1" that is the value of topic 52-1 included in transmission data 50-1, and stores data 54-1 (the ID and the start time) included in transmission data 50-1. At this time, because a record to which ID 164 having the same value as "001" that is the value of the ID of data 54-1 is assigned does not exist, server device 100 adds the new record.

As described above, when the value associated with the same ID as ID 56 (identification information) included in transmission data 50 is not stored in database 160, server device 100 (data management module 152) adds the new record in order to store the value associated with ID 56.

Subsequently, when workpiece 10 passes (when the processing on workpiece 10 in process 1 ends), transmission device 200-2 generates the ID of workpiece 10 obtained by optically reading two-dimensional code 12 assigned to workpiece 10 and the end time that is the time when the ID of workpiece 10 is read as data 54-2. Then, transmission device 200-2 adds "process 1" to data 54-2 as topic 52-2 to generate transmission data 50-2, and transmits transmission data 50-2 to server device 100.

When receiving transmission data 50-2 from transmission device 200-2, server device 100 (data management module 152) specifies table 162-1 corresponding to "process 1" that is the value of topic 52-2 included in transmission data 50-2, and stores data 54-2 (the ID and the end time) included in transmission data 50-2. At this time, because the record to which ID 164 having the same value as "001" that is the value of the ID of data 54-1 is assigned already exists, server device 100 stores the end time in the existing record.

In addition, server device 100 (an operation function 154 of data management module 152) calculates the difference between the start time and the end time as a work time for the record in which both the start time and the end time are stored. Then, server device 100 stores the calculated work time in the corresponding record.

Operation function 154 of data management module 152 is in charge of the processing of calculating the work time from the start time and the end time for each of workpieces 10. The calculation of the work time by operation function 154 may be any one as long as the corresponding start time and end time become complete. For example, the work time may be calculated immediately after the start time and the end time become complete, or the record in which the start time and the end time become complete may be extracted from the records included in table 162 every predetermined period, and the work time may be calculated for the extracted record.

When the processing in process 1 is completed, workpiece 10 is sent to process 2.

When workpiece 10 passes (when the processing on workpiece 10 in process 2 is started), transmission device 200-3 generates the ID of workpiece 10 obtained by optically reading two-dimensional code 12 assigned to workpiece 10 and the start time that is the time when the ID of workpiece 10 is read as data 54 -3. Then, transmission device 200-3 adds "process 2" to data 54 -3 as topic 52-3 to generate transmission data 50-3, and transmits transmission data 50-3 to server device 100.

Subsequently, when workpiece 10 passes (when the processing on workpiece 10 in process 2 ends), transmission device 200-4 generates the ID of workpiece 10 obtained by optically reading two-dimensional code 12 assigned to workpiece 10 and the end time that is the time when the ID of workpiece 10 is read as data 54 -4. Then, transmission device 200-4 adds "process 2" to data 54-4 as topic 52-4 to generate transmission data 50-4, and transmits transmission data 50-4 to server device 100.

When receiving transmission data 50-3 and transmission data 50-4 from transmission device 200-3 and transmission device 200-4, respectively, server device 100 (data management module 152) specifies table 162-2 corresponding to "process 2" and stores data 54 -2 and data 54 -4 included in transmission data 50-3, 50-4. In addition, server device 100 (operation function 154 of data management module 152) also calculates the difference between the start time and the end time as the work time for transmission data 50-3 and transmission data 50-4.

As described above, operation function 154 of data management module 152 executes the predetermined operation for a plurality of values (for example, "start time" and "end time") associated with the same ID, and adds a new value (for example, "work time").

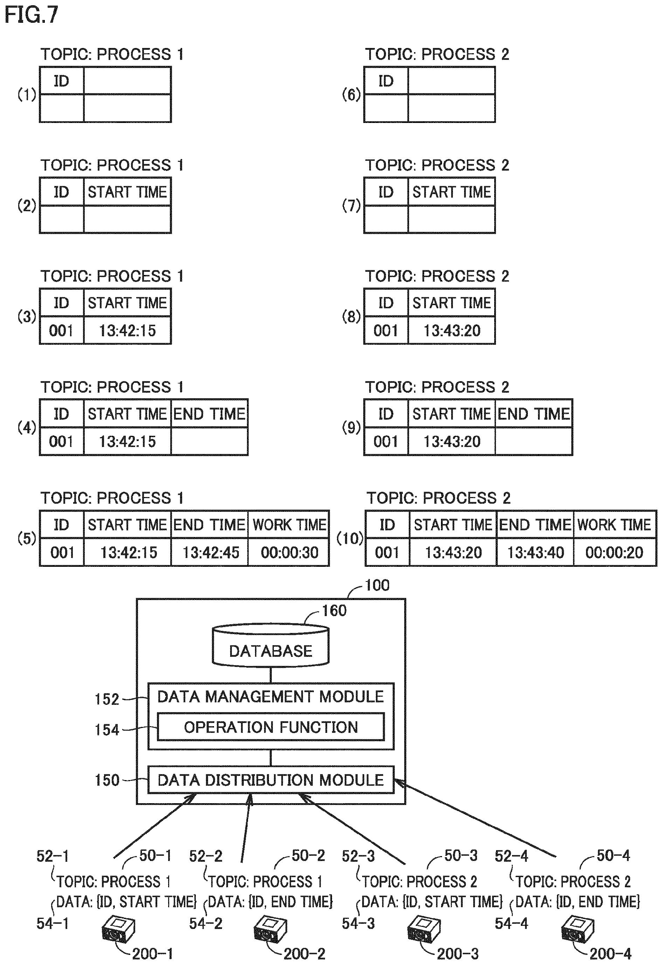

Fig. 7 is a schematic diagram illustrating an example of a temporal change generated in a data structure of database 160 in information processing system 1 of Fig. 6. Fig. 7 illustrates the example of a temporal change generated in the data structure of database 160 when the same workpiece 10 is sequentially processed in process 1 and process 2.

First, in the initial state, it is assumed that table 162 does not exist in database 160 of server device 100. When the processing in process 1 on workpiece 10 is started, server device 100 receives transmission data 50-1. Transmission data 50-1 includes information about "process 1" as topic 52-1.

The table corresponding to "process 1" does not exist, so that data management module 152 of server device 100 generates a new table. More specifically, data management module 152 generates the table to which "process 1" is assigned based on topic 52-1 included in transmission data 50-1 ((1) in Fig. 7). A column storing the ID that is essential information may be initially set in the generated table.

As described above, when the table that is a storage destination of the data associated with topic 52 included in transmission data 50 does not exist, data management module 152 of server device 100 newly generates the table associated with the topic.

Subsequently, the column corresponding to the "start time" that is the data name included in transmission data 50-1 does not exist, so that data management module 152 adds the new column ((2) in Fig. 7). As described above, when the column storing the data name of the value included in transmission data 50 does not exist, data management module 152 of server device 100 adds the new column storing the value of the data name.

Then, data management module 152 stores the value of the ID and the value of the start time included in transmission data 50-1 in the target record ((3) in Fig. 7).

Thereafter, when server device 100 receives transmission data 50-2, the column corresponding to the "end time" that is the data name included in transmission data 50-2 does not exist, so that data management module 152 adds the new column ((4) in Fig. 7).

Subsequently, data management module 152 specifies the record corresponding to the value of the ID included in transmission data 50-2 and stores the value of the end time included in transmission data 50-2 in the target record. Furthermore, data management module 152 calculates the working time from the value of the start time and the value of the end time. Because the column corresponding to "working time", data management module 152 adds the new column. Finally, data management module 152 stores the calculated working time value in the target record ((5) in Fig. 7).

Thereafter, when sequentially receiving transmission data 50-3 and transmission data 50-4, server device 100 executes the same processing as described above.

Specifically, when the processing in process 2 on workpiece 10 is started, server device 100 receives transmission data 50-3. Transmission data 50-3 includes information about "process 2" as topic 52-3.

Data management module 152 of server device 100 generates the table to which "process 2" is assigned based on topic 52-3 included in transmission data 50-3 ((6) in Fig. 7). Subsequently, the column corresponding to the "start time" that is the data name included in transmission data 50-3 does not exist, so that data management module 152 adds the new column ((7) in Fig. 7). Then, data management module 152 stores the value of the ID and the value of the start time included in transmission data 50-3 in the target record ((8) in Fig. 7).

Thereafter, when server device 100 receives transmission data 50-4, the column corresponding to the "end time" that is the data name included in transmission data 50-4 does not exist, so that data management module 152 adds the new column ((9) in Fig. 7).

Subsequently, data management module 152 specifies the record corresponding to the value of the ID included in transmission data 50-4, and stores the value of the end time included in transmission data 50-4 in the target record. Furthermore, data management module 152 calculates the work time from the value of the start time and the value of the end time. The column corresponding to "work time", so that data management module 152 adds the new column. Finally, data management module 152 stores the calculated work time value in the target record ((10) in Fig. 7).

Data management module 152 of server device 100 executes the above-described processing each time transmission data 50 is received. The generation of the new table and/or the addition of the new column are executed only when transmission data 50 including new topic 52 is received.

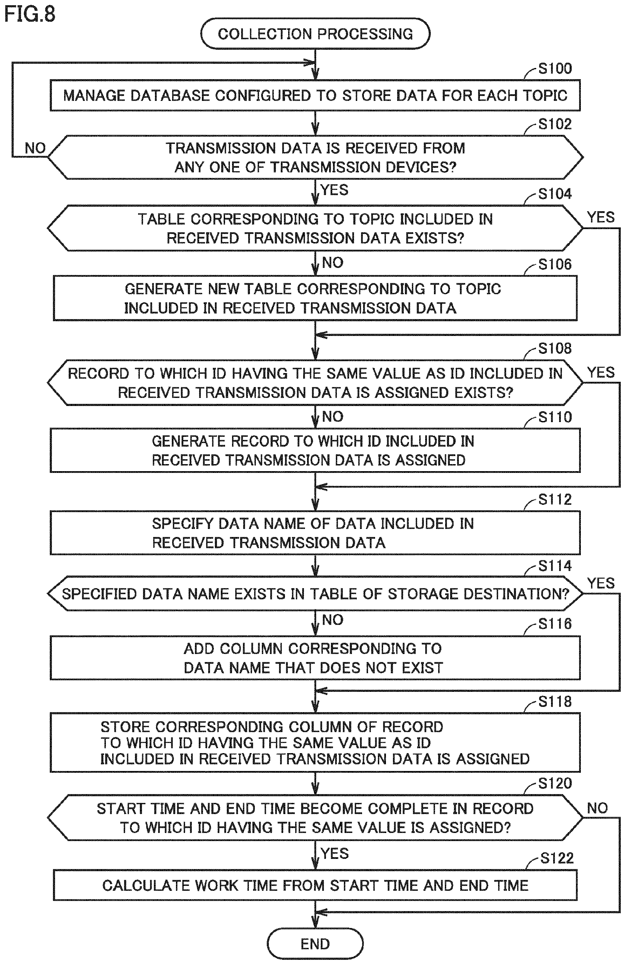

Fig. 8 is a flowchart illustrating a processing procedure executed by server device 100 related to the collection processing of information processing system 1 of the embodiment. Typically, processor 102 of server device 100 executes information processing program 114 to implement each step in Fig. 8.

With reference to Fig. 8, server device 100 manages database 160 configured to store data for each topic (step S100). Then, server device 100 determines whether transmission data 50 is received from any one of transmission devices 200 (step S102). That is, server device 100 determines whether transmission device 200 transmits transmission data 50 to server device 100. When transmission data 50 is not received (NO in step S102), the processing in step S102 is repeated.

When transmission data 50 is received (YES in step S102), server device 100 determines whether table 162 corresponding to topic 52 included in received transmission data 50 exists (step S104).

When table 162 corresponding to topic 52 included in received transmission data 50 does not exist (NO in step S104), server device 100 generates new table 162 corresponding to topic 52 included in received transmission data 50 (step S106).

In this manner, server device 100 specifies the storage destination of the data based on topic 52 included in transmission data 50.

When table 162 corresponding to topic 52 included in received transmission data 50 exists (YES in step S104), or after new table 162 is generated (after execution of step S106), server device 100 determines whether a record to which ID 164 having the same value as ID 56 included in received transmission data 50 is assigned exists (step S108).

When the record to which ID 164 having the same value as ID 56 included in received transmission data 50 is assigned does not exist (NO in step S108), server device 100 generates the record to which ID 56 included in received transmission data 50 is assigned as ID 164 (step S110).

Subsequently, server device 100 specifies the data name (start time and/or end time) of data 54 included in received transmission data 50 (step S112). Then, server device 100 determines whether the specified data name exists in table 162 of the storage destination (step S 114).

When the specified data name does not exist in table 162 of the storage destination (NO in step S 114), server device 100 adds the new column corresponding to the data name that does not exist (step S116).

When the specified data name exists in table 162 of the storage destination (YES in step S 114), or after the new column is added to table 162 (after the execution of step S116), server device 100 stores value 58 included in data 54 included in received transmission data 50 in the corresponding column of the record to which ID 164 having the same value as ID 56 is assigned (step S118). In this manner, server device 100 stores data 54 included in transmission data 50 in the storage destination of the specified data. At this time, when the value associated with the same ID 56 as ID 164 included in transmission data 50 is already stored in database 160, server device 100 stores one or more values 58 included in data 54 included in transmission data 50 in association with ID 164 already stored in database 160.

Subsequently, server device 100 determines whether the start time and the end time become complete in the record to which ID 164 having the same value as ID 56 is assigned (step S120). In the record to which ID 164 having the same value as ID 56 is assigned, when the start time and the end time become complete (YES in step S120), server device 100 calculates the work time from the start time and the end time (step S122).

In the record to which ID 164 having the same value as ID 56 is assigned, when the start time and the end time do not become complete (NO in step S 120), the processing in step S122 is skipped.

As described above, in each of process 1 and process 2, the time (work time) required for the work on workpiece 10 can be collected. Workpieces 10 are sequentially processed, the start time, so that the end time, and the work time can be used as the data analyzing an average value, variation, or the like of the work time required for each process by accumulating the start time, the end time, and the work time for all workpieces 10.

For convenience of description, the example including two processes has been described. However, even in the case where one or more processes are added, a flexible response can be ensured. For example, when process 3 is added, transmission device 200 is newly disposed in added process 3, and "process 3" is set as topic 52 for newly added transmission device 200. Thus, server device 100 generates table 162 corresponding to the new value of topic 52.

As illustrated in Fig. 6, different transmission devices 200 transmit the data (the start time and the end time) about the same workpiece 10 to server device 100 at different timings. Even in the case where a plurality of temporally distributed data are transmitted as described above, the required data can be aggregated for each workpiece 10 using topic 52 and ID 56.

### <E. Management of topic and data name>

As described above, information processing system 1 of the embodiment collects the data from the plurality of transmission devices 200 based on the topic. In addition, the plurality of types of data are sequentially collected for the same ID. Accordingly, management of the topic and data name specified when transmission device 200 transmits the data is required.

For example, in configuring information processing system 1 as illustrated in Fig. 6, the topic and the data name are set in data transmission module 250 of transmission device 200. As illustrated in Fig. 6, the same topic 52 ("process 1" in the example of Fig. 6) and ID (in the example of Fig. 6, the value read from two-dimensional code 12 assigned to workpiece 10) are set for transmission device 200-1 and transmission device 200-2, "start time" is set as the data name for transmission device 200-1, and "end time" is set as the data name for transmission device 200-1, thereby implementing the data aggregation and operation in server device 100.

On the other hand, because the system in which the plurality of transmission devices 200 transmit the data independently is adopted, there is a possibility that the same topic is unintentionally set among the plurality of transmission devices 200 that should not be associated with each other. Accordingly, when the topic is set, preferably the presence or absence of duplication or the like is checked. Similarly, when the data name is set, preferably the presence or absence of duplication or the like is checked.

More specifically, when the topic and/or the data name is set for data transmission module 250, data transmission module 250 inquires server device 100 whether the topic and/or the data name to be set is already used by another data transmission module 250. When the topic and/or the data name to be set are/is already used by another data transmission module 250, a setting error or the like can be prevented by notifying the user.

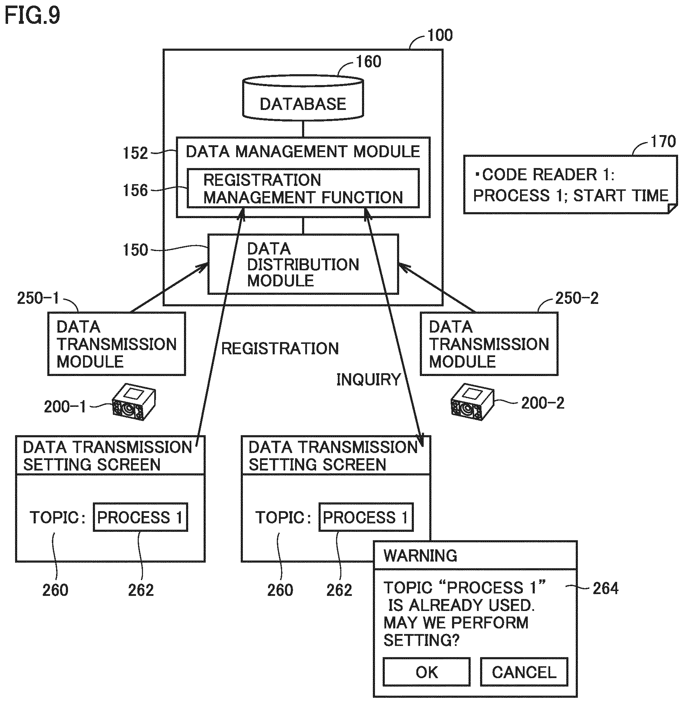

Fig. 9 is a schematic diagram illustrating management processing of information processing system 1 of the embodiment. With reference to Fig. 9, data management module 152 of server device 100 has a registration management function 156. Registration management function 156 of data management module 152 includes a setting table 170 recording the topic and/or the data name set in transmission device 200. When the topic and/or the data name are/is set in transmission device 200 that is the transmission source of transmission data 50, registration management function 156 of data management module 152 registers the setting content in setting table 170.

More specifically, data transmission module 250-1 of transmission device 200-1 provides the user with an interface accepting the setting of the topic and/or the data name. Fig. 9 illustrates an example of a setting window 260. The user inputs the value (for example, "process 1") of the topic desired to be set in an input window 262 of setting window 260. Then, data transmission module 250-1 of transmission device 200-1 transmits the content set by the user to server device 100.

Registration management function 156 of data management module 152 registers the setting contents from data transmission module 250-1 of transmission device 200-1 in setting table 170. In this manner, registration management function 156 of data management module 152 manages the topic and/or the data name transmitted from transmission device 200-1, so that the inquiry about the presence or absence of the duplication or the like can be responded to. For convenience of description, Fig. 9 illustrates setting window 260 setting the topic, and setting window 260 may set the data name.

Thereafter, it is assumed that the user sets the topic for transmission device 200-1. Also in this case, data transmission module 250-1 of transmission device 200-1 presents setting window 260 to the user, and the user inputs the value (for example, "process 1") of the topic desired to be set in input window 262 of setting window 260. Then, data transmission module 250-2 of transmission device 200-2 transmits the content set by the user to server device 100.

Registration management function 156 of data management module 152 refers to setting table 170 to determine whether the same content as the setting content is registered from data transmission module 250-2 of transmission device 200-2. Registration management function 156 of data management module 152 responds to data transmission module 250-2 of transmission device 200-2 whether the same content as the setting content from the data transmission module 250-2 is registered.

When the content set by the user is already registered, data transmission module 250-2 of transmission device 200-2 notifies the fact. For example, a notification window 264 notifying that the setting content is already registered may be displayed.

In this manner, registration management function 156 of data management module 152 determines whether the same topic as the topic set in data transmission module 250 (transmission device 200) already exists in database 160. Alternatively, registration management function 156 of data management module 152 may determine whether the same data name as the data name of one or more values 58 included in transmission data 50 transmitted by data transmission module 250 (transmission device 200) already exists in database 160.

An error in setting of the topic and/or the data name and the like can be prevented by implementing such the management function.

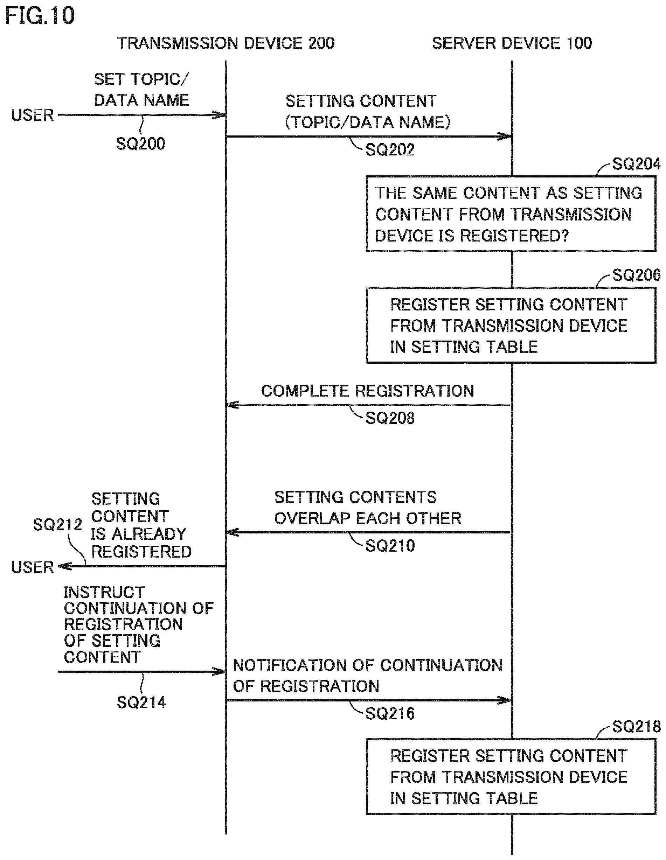

Fig. 10 is a sequence diagram illustrating a processing procedure related to the management processing of information processing system 1 of the embodiment.

With reference to Fig. 10, when receiving the setting for the topic and/or the data name from the user (sequence SQ200), transmission device 200 (data transmission module 250) transmits the received setting content to server device 100 (registration management function 156 of data management module 152) (sequence SQ202).

Server device 100 refers to setting table 170 to determine whether the same content as the setting content from transmission device 200 is registered (sequence SQ204). When the same content as the setting content from transmission device 200 is not registered, server device 100 registers the setting content from transmission device 200 in setting table 170 (sequence SQ206), and notifies transmission device 200 of registration completion (sequence SQ208).

When the same content as the setting content from transmission device 200 is registered, server device 100 notifies transmission device 200 that the setting content overlaps each other (sequence SQ210). Transmission device 200 notifies the user that the setting content is already registered (sequence SQ212).

When the user instructs to continue registration of the setting content (sequence SQ214), transmission device 200 notifies server device 100 of the continuation of the registration (sequence SQ216). In accordance with the notification of the continuation of the registration from transmission device 200, server device 100 registers the setting content from transmission device 200 in setting table 170 (sequence SQ218).

### <F. Totalization function>

An example of the totalization function of information processing system 1 according to the embodiment will be described below.

When an administrator, a manager, or the like wants to monitor key performance indicators (KPIs) or the like at a production site, the totalization of productivity, quality, a facility operation rate, used energy, and the like of the entire plurality of lines is required in a bird's eye view. A mechanism that can easily totalize the production statuses of the plurality of lines is beneficial. Hereinafter, an example of such the totalization function will be described.

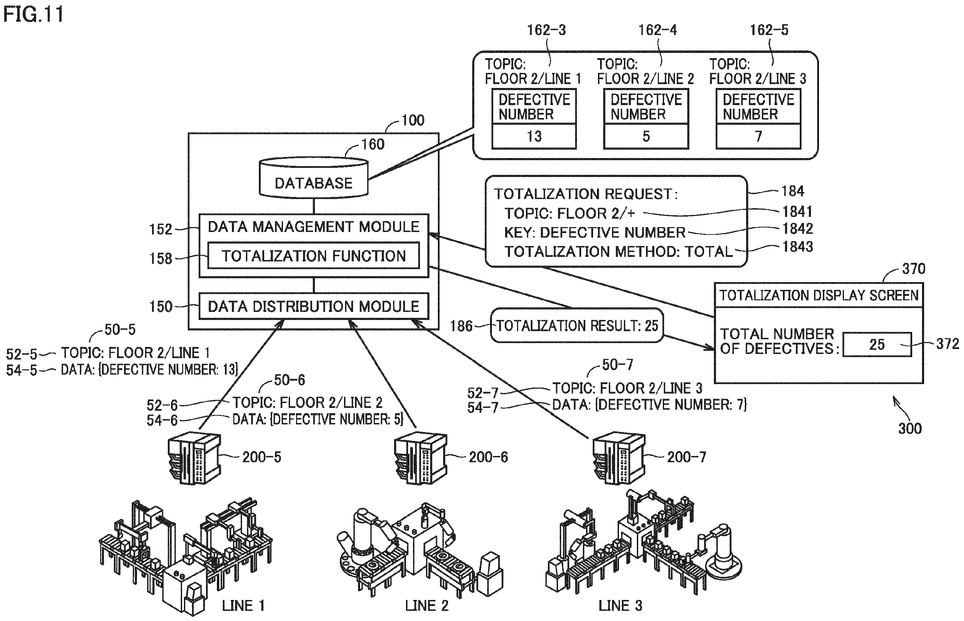

Fig. 11 is a schematic diagram illustrating totalization processing of information processing system 1 of the embodiment. Fig. 11 illustrates an example in which the defective number of each line is collected as data associated with a subtopic, and the total number of defectives of the entire line is designated as a parent topic for totalization. The case where three lines of "line 1", "line 2", "line 3" exist on "floor 2" is illustrated as an example.

With reference to Fig. 11, a programmable logic controller (PLC) that controls each line functions as transmission devices 200-5, 200-6, 200-7. Each of transmission devices 200-5, 200-6, 200-7 counts the number of defectives generated in line 54 in charge, and transmits transmission data 50-5, 50-6, 50-7 including the counted number of defectives as data 54-5, 54-6, 54-7 to server device 100.

Each of the topics 52-5, 52-6, 52-7 included in transmission data 50-5, 50-6, 50-7 designates a target floor and line in a hierarchical structure. More specifically, topic 52-5 of transmission data 50-5 is "floor2/line1", topic 52-6 of transmission data 50-6 is "floor2/line2", and topic 52-7 of transmission data 50-7 is "floor2/line3".

Database 160 of server device 100 stores tables 162-3, 162-4, 162-5 corresponding to respective topics 52. In tables 162-3, 162-4, 162-5, "floor2/line1", "floor2/line2", and "floor2/line3" are assigned as topics, respectively. Data management module 152 stores transmission data 50-5, 50-6, 50-7 received from transmission device 200-5, 200-6, 200-7 in table 162 corresponding to topic 52. In the example illustrated in Fig. 11, the value of the number of defectives included in data 54 is stored in the column of a "defective number".

Data management module 152 of server device 100 has a totalization function 158. Totalization function 158 of data management module 152 searches and totalizes the data stored in one or more tables 162 in response to a totalization request 184. In particular, totalization function 158 extracts the target data based on the hierarchical structure of the topics, and executes specified totalization processing on the extracted data to generate a totalization result.

For example, it is assumed that information processing device 300 transmits totalization request 184 to server device 100. Information processing device 300 may display a setting window setting the content of totalization request 184.

More specifically, totalization request 184 includes a topic 1841, a key 1842, and a totalization method 1843.

"Floor 2/+" is designated as topic 1841. Here, "+" means a wildcard. In this manner, totalization request 184 may include a description using the wildcard designating the target topic. The "defective number" is designated for key 1842, and "total" is designated for totalization method 1843.

Totalization function 158 of data management module 152 extracts the table matched with "floor 2/+" that is designated topic 1841 among tables 162 stored in database 160. That is, "floor 2/+" means all tables 162 to which the topics starting with "floor" are assigned, so that tables 162-3, 162-4, 162-5 are extracted as the target.

Then, totalization function 158 of data management module 152 extracts values stored in the column of the "defective number" that is designated key 1842 from extracted table 162.

Finally, totalization function 158 of data management module 152 calculates a sum of the extracted values according to "total" that is designated totalization method 1843. Then, totalization function 158 of data management module 152 responds to information processing device 300 with the calculated total number of defectives as the totalization result. Information processing device 300 displays a result window 370 including totalization result 372.

In this manner, totalization function 158 of data management module 152 executes the totalization processing designated by totalization request 184 for the plurality of values associated with topic 1841 designated by totalization request 184 in response to totalization request 184.

In this way, by using topic 52 of the hierarchical structure, the totalization processing can be easily realized for a plurality of data sources (for example, a line).

Server device 100 may execute the totalization processing in response to the reception of totalization request 184. That is, when receiving totalization request 184, totalization function 158 of data management module 152 may execute the totalization processing according to received totalization request 184.

On the other hand, totalization function 158 of data management module 152 may periodically execute predetermined totalization processing, and store the obtained totalization result in a table assigned with another topic. For example, by totalizing the data for one day by nighttime batch processing, the totalization processing each time totalization request 184 is received is not required to be executed, the processing load can be reduced, and the response of the totalization result can be speeded up.

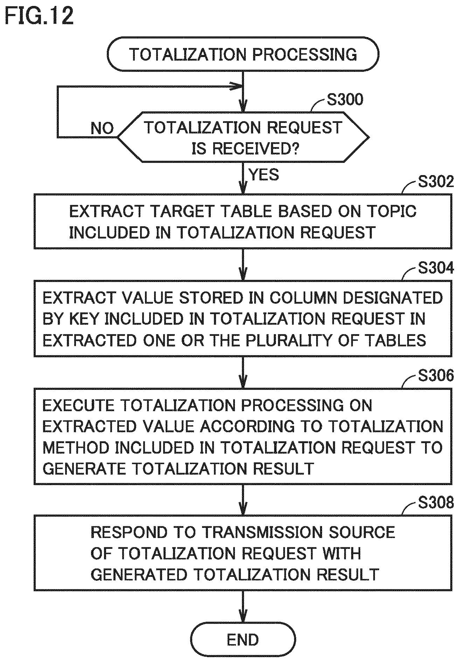

Fig. 12 is a flowchart illustrating a processing procedure executed by server device 100 related to the totalization processing of information processing system 1 of the embodiment. Typically, processor 102 of server device 100 executes information processing program 114 to implement each step in Fig. 12.

With reference to Fig. 12, server device 100 determines whether totalization request 184 is received (step S300). When totalization request 184 is not received (NO in step S300), the processing in step S300 is repeated.

When totalization request 184 is received (YES in step S300), server device 100 extracts target table 162 based on topic 1841 included in totalization request 184 (step S302). Then, server device 100 extracts the value stored in the column designated by key 1842 included in totalization request 184 among the extracted one or plurality of tables 162 (step S304). Furthermore, server device 100 executes totalization processing on the extracted values according to totalization method 1843 included in totalization request 184 to generate the totalization result (step S306). Then, server device 100 responds to the transmission source of totalization request 184 with the generated totalization result (step S308).

### <G. Advantages>

At the production site, various devices and sensors are distributed, and many workers are distributed as production resources. These are combined to constitute a production system and an organization. Production activities are performed by cooperation of a plurality of production systems and organizations. Production activities at production sites produce not only "things" but also many "data".

Because the data is generated from the distributed production resources, the generated data is also spatially and temporally distributed. In order to collect such temporally and spatially dispersed data for utilization of production improvement, the data related to each other is required to be aggregated and processing such as totalization is also required.

In addition, because the production resources (devices, sensors, workers, and the like) are often changed as needed according to the production situation, such the change is also required to be responded to.

The information processing system of the embodiment can efficiently collect the data acquired from the production site using the topic and the ID. In addition, the change of the production resource can be flexibly responded to by appropriately setting or appropriately changing the topic and the ID.

Although the embodiment of the present invention has been described, it should be considered that the disclosed embodiment is an example in all respects and not restrictive. The scope of the present invention is indicated by the claims, and it is intended that all modifications within the meaning and scope of the claims are included in the present invention.

## Claims

1. An information processing system (1) comprising:
a transmission unit (200, 250) configured to transmit transmission data (50) including data (54) including one or more values (58) and identification information (56) associated with the one or more values and a topic (52) indicating an attribute of the data;
a database (160, 162) configured to store data for each topic; and
a data management unit (152) configured to specify a storage destination of data based on the topic included in the transmission data and store the data included in the transmission data in the specified storage destination of the data, wherein
when a value associated with same identification information as the identification information included in the transmission data is already stored in the database, the data management unit is configured to store one or more values included in the data included in the transmission data in association with the identification information already stored in the database.

2. The information processing system according to claim 1, wherein when a storage destination (162) of data associated with the topic (52) included in the transmission data does not exist, the data management unit is configured to newly generate the storage destination of data associated with the topic.

3. The information processing system according to claim 1 or 2, wherein when the value associated with the same identification information as the identification information included in the transmission data is not stored in the database, the data management unit is configured to add a new record in order to store the value associated with the identification information.

4. The information processing system according to any one of claims 1 to 3, wherein when a column storing a data name of a value included in the transmission data does not exist, the data management unit is configured to add a new column in order to store the value of the data name.

5. The information processing system according to any one of claims 1 to 4, wherein the data management unit (152, 154) is configured to execute a predetermined operation on a plurality of values associated with the same identification information and add a new value.

6. The information processing system according to any one of claims 1 to 5, wherein the data management unit (152, 156) is configured to determine whether same topic as the topic set in the transmission unit already exists in the database.

7. The information processing system according to any one of claims 1 to 6, wherein the data management unit (152, 156) is configured to determine whether same data name as the data name of the one or more values included in the transmission data transmitted by the transmission unit already exists in the database.

8. The information processing system according to any one of claims 1 to 7, wherein the topic is described in a hierarchical structure.

9. The information processing system according to any one of claims 1 to 8, wherein according to a totalization request (184), the data management unit (152, 158) is configured to execute totalization processing designated by the totalization request on a plurality of values associated with a topic designated by the totalization request.

10. The information processing system according to claim 9, wherein the totalization request includes description using a wildcard for designating a target topic.

11. The information processing system according to claim 9 or 10, wherein when receiving the totalization request, the data management unit is configured to execute the totalization processing according to the received totalization request.

12. An information processing method comprising:
managing (S100) a database (160) configured to store data for each topic;
transmitting (SI02) transmission data (50) including data (54) including one or more values (58) and identification information (56) associated with the one or more values and a topic (52) indicating an attribute of the data;
specifying (S104, S106) a storage destination of data based on the topic included in the transmission data; and
storing (S114) the data included in the transmission data in the specified storage destination of the data, wherein
the storing includes storing one or more values included in the data included in the transmission data in association with the identification information already stored in the database when a value associated with same identification information as the identification information included in the transmission data is already stored in the database.

13. An information processing program (114) causing a computer (100) to execute:
managing (S100) a database (160) configured to store data for each topic;
specifying (S104, S106) a storage destination of data based on a topic (52) included in transmission data (50) in response to the transmission data including data (54) including one or more values (58) and identification information (56) associated with the one or more values and the topic indicating an attribute of the data; and
storing (S114) the data included in the transmission data in the specified storage destination of the data, wherein
the storing includes storing one or more values included in the data included in the transmission data in association with the identification information already stored in the database when a value associated with same identification information as the identification information included in the transmission data is already stored in the database.
